# EUROPEAN PATENT SPECIFICATION

(11) **EP 4 385 319 B1**
(45) Date of publication and mention of the grant of the patent: **12.08.2026**
(21) Application number: 23217029.0
(22) Date of filing: 15.12.2023
(51) Int. Cl.: A01J 9/04

(54) **VESSEL FOR COOLING MILK**
GEFÄSS ZUM KÜHLEN VON MILCH
RÉCIPIENT POUR REFROIDIR DU LAIT

(30) Priority: 16.12.2022 GB 202219061
(43) Date of publication of application: 19.06.2024
(73) Proprietor: Fabdec Limited, Ellesmere Shropshire SY12 9DG (GB)
(72) Inventor: Reeves, Derek, Ellesmere, Shropshire SY12 9DG (GB)
(74) Representative: White, Andrew John

(56) References cited:
- CH-A- 411 443
- DE-B- 1 259 134
- US-A- 4 351 271

## Description

### Field of disclosure

The present disclosure relates to vessels for cooling milk.

### Background

Milk is extracted from mammals, such as cows, for human consumption. Typically milk is extracted from a plurality of one type of mammal (e.g. by automated teat-cups applied to the teats of the mammals) and then sent to a vessel for cooling milk. In the art this vessel may be referred to as a refrigerated bulk milk tank.

The vessel for cooling milk (i.e. the refrigerated bulk milk tank) lowers the temperature of the milk extracted from the mammal from approximately the body temperature of the mammal to a refrigerated temperature to thereby extend the time before which the milk spoils. The design standard ISO 5708 for refrigerated bulk milk tanks (i.e. vessels for cooling milk) states that milk must be cooled from 35°C to 4°C within 2.5 hours of leaving the cow.

German patent publication 1259134 discloses a device for cooling milk in a heat-insulated container cooled from below by evaporation of a coolant, consisting essentially of a drive motor and an agitator blade arranged in the middle of the container.

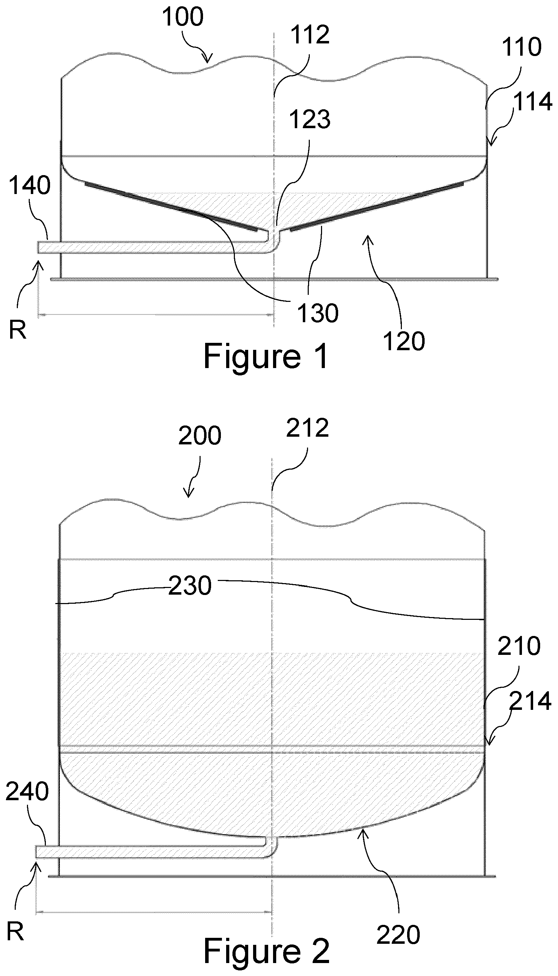

Typical vessels for cooling milk comprise: a tank which defines a liquid volume within which liquid (i.e. milk) can be disposed; an inlet to permit liquid to flow into the liquid volume; an outlet tube to permit liquid to flow out of the liquid volume; and a cooling panel for cooling a liquid disposed in the liquid volume. Figures 1 to 3 each illustrate a lateral cross-sectional view of part of a different prior art vessel for cooling milk.

Figure 1 illustrates a lateral cross-sectional view of part of a first prior art vessel for cooling milk. The first prior art vessel has a funnel-shaped base. The vessel 100 comprises: a cylindrical wall 110; a base 120; a cooling panel 130; and, an outlet tube 140.

The cylindrical wall 110 is arranged around a longitudinal axis 112. The cylindrical wall 110 comprises a first longitudinal end 114. The cylindrical wall 110 delimits a cylindrical volume.

The base 120 is connected to the cylindrical wall 110. In particular, the first longitudinal end 114 of the cylindrical wall is connected to the base 120. Together the cylindrical wall 110 and the base 120 delimit a liquid volume. That is, the cylindrical wall 110 and the base 120 form a tank configured to hold a liquid within the liquid volume.

The base 120 is funnel-shaped. The funnel-shaped base 120 extends towards an apex 123 disposed outside of the cylindrical volume. Therefore, in the present example, the liquid volume is greater than the cylindrical volume. The apex 123 is disposed along the central longitudinal axis 123. As a result, the base 120 has rotational symmetry about the central longitudinal axis 123.

The cooling panel 130 is disposed along at least a portion of the base 120. The cooling panel 130 is funnel-shaped. The cooling panel 130 is sized to fit under the sloped surface of the base 120. The cooling panel 130 is arranged so that liquid in contact with the base 120 is able to be cooled by the cooling panel 130. In other words, the cooling panel 130 is designed to be in contact with the base 120 i.e. so that there is no space provided between the base 120 and the cooling panel 130.

The outlet tube 140 is disposed at the apex 123 of the base 120. The outlet tube 140 is configured to receive liquid from the liquid volume. The outlet tube 140 is configured to permit liquid to be removed through the liquid volume via the outlet tube 140.

The outlet tube 140 is disposed in fluid communication with the liquid volume i.e. the outlet tube 140 is configured to remove liquid from the liquid volume. The outlet tube 140 extends between the apex 123 to a radial position R. The radial position is disposed at distance from the central longitudinal axis 112 which is greater than the radius of the cylindrical walls 110.

Typical vessels having the structure illustrated in Figure 1 have an outlet tube 140 with a length of 1583 mm i.e. the distance between the apex 123 and the radial position R is 1583 mm.

In use, liquid (e.g. milk) is introduced into the liquid volume e.g. via a inlet, not shown in Figure 1. Typically, the cooling panels are operated when the liquid in the liquid volume is disposed over at least half of the area of the cooling panel 130, then the cooling panel 130 is operated to cool the liquid.

The volume of liquid required in the liquid volume to cover at least half of the area of the cooling panel 130 depends on factors including: the geometry of the tank formed by the cylindrical walls 110 and the base 120; the volume of the tank i.e. the liquid volume. It will be appreciated that the time taken for the liquid in the liquid volume to cover at least half of the area of the cooling panel 130 depends on: volume of liquid required in the liquid volume to cover at least half of the area of the cooling panel 130; and, the flow rate at which the liquid is introduced to the liquid volume.

A typical vessel for cooling milk having the structure illustrated in Figure 1 have a volume of approximately 40,000 litres (40 m³) and a radius of approximately 1500 mm. With typical vessels of this structure, a volume of approximately 270 litres of liquid (approximately 0.27 m³) in the liquid volume is required to dispose over at least half of the area of the cooling panel 130.

A typical vessel having the structure illustrated in Figure 1 does not have enough space underneath the vessel for accessibility i.e. for repairs or maintenance to be carried out underneath the vessel. That is, the funnel-shaped base 120 prevents access to the underside of the vessel. If repairs or maintenance are required underneath a typical vessel having this design, then the vessel may need to be removed or disassembled to thereby affect the repairs or maintenance. This may result in increased costs associated with the repairs or maintenance. This may result in a greater period of downtime for the vessel whilst the repairs or maintenance are affected in comparison to if the vessels had not needed to be removed or disassembled.

In examples, the vessel may be provided on a platform above ground level to allow access to the underside of the vessel for repairs or maintenance. However, the platform may increase the total cost of installation of the vessel. In some circumstances it may not be possible to provide a platform e.g. lack of space for the combination of the vessel and platform.

Figure 2 illustrates a lateral cross-sectional view of part of a second prior art vessel for cooling milk. The second prior art vessel has a rounded base. The vessel 200 comprises: a cylindrical wall 210; a base 220; a cooling panel 230; and, an outlet tube 240.

The cylindrical wall 210 is arranged around a longitudinal axis 212. The cylindrical wall 210 comprises a first longitudinal end 214. The cylindrical wall 210 delimits a cylindrical volume.

The base 220 is connected to the cylindrical wall 210. In particular, the first longitudinal end 214 of the cylindrical wall is connected to the base 220. Together the cylindrical wall 210 and the base 220 delimit a liquid volume. That is, the cylindrical wall 210 and the base 220 form a tank configured to hold a liquid within the liquid volume.

The base 220 is rounded i.e. the base 220 has a dome-like shape. The rounded base 220 extends towards an apex 223 disposed outside of the cylindrical volume. Therefore, in the present example, the liquid volume is greater than the cylindrical volume. The apex 223 is disposed along the central longitudinal axis 223. As a result, the base 220 has rotational symmetry about the central longitudinal axis 223.

The cooling panel 230 is disposed along at least a portion of the cylindrical wall 210. The cooling panel 230 is cylindrical. The cooling panel 130 is sized to fit around the cylindrical wall 210. The cooling panel 230 is arranged so that liquid in contact with the cylindrical wall 210 is able to be cooled by the cooling panel 230. In other words, the cooling panel 230 is designed to be in contact with the cylindrical wall 210 i.e. so that there is no space provided between the cylindrical wall 220 and the cooling panel 230.

The outlet tube 240 is disposed at the apex 223 of the base 220. The outlet tube 240 is configured to receive liquid from the liquid volume. The outlet tube 240 is configured to permit liquid to be removed through the liquid volume via the outlet tube 240.

The outlet tube 240 is disposed in fluid communication with the liquid volume i.e. the outlet tube 240 is configured to remove liquid from the liquid volume. The outlet tube 240 extends between the apex 223 to a radial position R. The radial position is disposed at distance from the central longitudinal axis 212 which is greater than the radius of the cylindrical walls 110.

Typical vessels having the structure illustrated in Figure 2 have an outlet tube 240 with a length of 1583 mm i.e. the distance between the apex 223 and the radial position R is 1583 mm.

In use, liquid (e.g. milk) is introduced into the liquid volume e.g. via a inlet, not shown in Figure 1. Typically, the cooling panels are operated when the liquid in the liquid volume is disposed over at least half of the area of the cooling panel 230, then the cooling panel 130 is operated to cool the liquid.

The volume of liquid required in the liquid volume to cover at least half of the area of the cooling panel 330 depends on factors set out above with reference to Figure 1.

A typical vessel for cooling milk having the structure illustrated in Figure 2 have a volume of approximately 40,000 litres (40 m³) and a radius of approximately 1500 mm. With typical vessels of this structure, a volume of approximately 3980 litres of liquid (approximately 3.98 m³) in the liquid volume is required to dispose over at least half of the area of the cooling panel 230.

A typical vessel having the structure illustrated in Figure 2 does not have enough space underneath the vessel for accessibility i.e. for repairs or maintenance to be carried out underneath the vessel. That is, the rounded base 220 prevents access to the underside of the vessel. Therefore, the same disadvantages as described above with reference to Figure 1 may affect the vessel of Figure 2. Similarly, at least some of these disadvantages may be obviated by providing a platform to dispose the vessel on, however, the same disadvantages associated with the platform may be present which are set out above with reference to Figure 1.

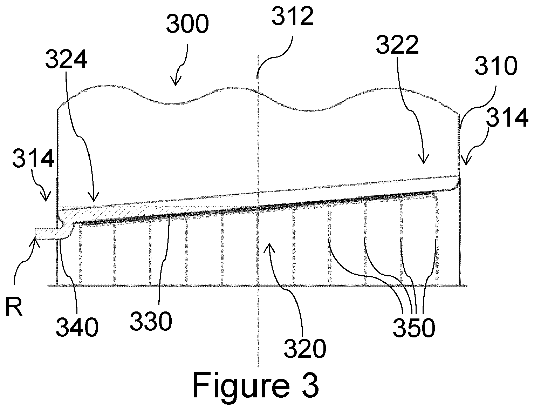

Figure 3 illustrates a lateral cross-sectional view of part of a third prior art vessel for cooling milk. The third prior art vessel has a flat canted base. The vessel 300 comprises: a cylindrical wall 310; a base 320; a cooling panel 330; an outlet tube 340; and a structural support 350.

The cylindrical wall 310 is arranged around a longitudinal axis 312. The cylindrical wall 310 comprises a first longitudinal end 314. The cylindrical wall 310 delimits a cylindrical volume.

The base 320 is connected to the cylindrical wall 310. In particular, the first longitudinal end 314 of the cylindrical wall is connected to the base 320. Together the cylindrical wall 310 and the base 320 delimit a liquid volume. That is, the cylindrical wall 310 and the base 320 form a tank configured to hold a liquid within the liquid volume.

The base 320 is flat and canted relative to the central longitudinal axis 312 i.e. a normal vector to the base 320 is disposed at a non-zero angle to the central longitudinal axis 312. The base 320 has a top side 322 and a bottom side 324. The base 320 is elliptically-shaped. The base 320 is arranged so that liquid in the liquid volume flows from the top side 322 of the base 320 towards the bottom side 324 of the base 320.

The cooling panel 330 is disposed along at least a portion of the base 320. The cooling panel 330 is elliptically-shaped. The cooling panel 330 is sized to fit under the sloped surface of the base 320. The cooling panel 330 is arranged so that liquid in contact with the base 320 is able to be cooled by the cooling panel 330. In other words, the cooling panel 330 is designed to be in contact with the base 320 i.e. so that there is no space provided between the base 320 and the cooling panel 330.

The outlet tube 340 is disposed at the bottom side 324 of the base 320. The outlet tube 340 is configured to receive liquid from the liquid volume. The outlet tube 340 is configured to permit liquid to be removed through the liquid volume via the outlet tube 340.

The outlet tube 340 is disposed in fluid communication with the liquid volume i.e. the outlet tube 340 is configured to remove liquid from the liquid volume. The outlet tube 340 extends from the bottom side 324 of the base 320 to a radial position R. The radial position is disposed at distance from the central longitudinal axis 312 which is greater than the radius of the cylindrical walls 310.

Typical vessels having the structure illustrated in Figure 3 have an outlet tube 340 which is shorter than the radius of the cylindrical walls 310.

In use, liquid (e.g. milk) is introduced into the liquid volume e.g. via a inlet, not shown in Figure 3. Typically, the cooling panels are operated when the liquid in the liquid volume is disposed over at least half of the area of the cooling panel 330, then the cooling panel 330 is operated to cool the liquid.

The volume of liquid required in the liquid volume to cover at least half of the area of the cooling panel 330 depends on factors set out above with reference to Figure 1.

A typical vessel for cooling milk having the structure illustrated in Figure 3 have a volume of approximately 40,000 litres (40 m³) and a radius of approximately 1500 mm. With typical vessels of this structure, a volume of approximately 190 litres of liquid (approximately 0.19 m³) in the liquid volume is required to dispose over at least half of the area of the cooling panel 330.

The flat canted base 320 is structurally weak (compared to the funnel-shaped base 120 and the rounded base 220 illustrated in Figures 1 and 2 respectively). For example, the base 320 may buckle if the weight of 40,000 litres of milk were disposed atop it. Therefore, typical vessels with this design have the structural support 350 provided below the base 320 configured to support the base 320.

A typical vessel having the structure illustrated in Figure 3 does not have enough space underneath the vessel for accessibility i.e. for repairs or maintenance to be carried out underneath the vessel. That is, the structural support 350 prevents access to the underside of the vessel. Therefore, the same disadvantages as described above with reference to Figure 1 may affect the vessel of Figure 3. Similarly, at least some of these disadvantages may be obviated by providing a platform to dispose the vessel on, however, the same disadvantages associated with the platform may be present which are set out above with reference to Figure 1.

### Summary

The present invention is defined by the appended independent claims. Optional features are set out in the dependent claims.

5 A first aspect of the invention according to claim 1 discloses a vessel for cooling milk, the vessel comprising:
a tank configured to hold a liquid, the tank comprising:
a cylindrical side wall enclosing a cylindrical volume around a central longitudinal axis, the cylindrical side wall having a first longitudinal end; and
a base connected to the cylindrical side wall at the first longitudinal end of the cylindrical side wall, wherein the cylindrical side wall and the base enclose a liquid volume configured to hold a liquid, wherein the base comprises a projection portion which projects into the cylindrical volume from the first longitudinal end of the cylindrical side wall;
a cooling panel disposed along at least a portion of the base wherein the cooling panel is configured to cool a liquid disposed in the liquid volume;
an agitator paddle disposed within the liquid volume, the agitator paddle being configured to rotate about the central longitudinal axis, wherein the agitator paddle is rotated by an axle disposed through the liquid volume thereto to establish a circulation loop, wherein the agitator paddle moves liquid from close to the base and outer radius of the liquid volume of the vessel towards the central longitudinal axis, such that the liquid is moved upwards and radially outwards towards the cylindrical side wall and back down along the cylindrical side wall to the outer radius and the base of the vessel; and
an outlet tube disposed in the base, wherein the outlet tube is configured to permit a liquid disposed in the liquid volume to exit the tank.

Vessels according to this aspect of the disclosure may contain up to 40,000 litres of liquid (e.g. milk) which will have a total mass of greater than 40 tonnes. Advantageously, the projection portion of the base improves structural integrity of the vessel, relative to, for example, the third prior art vessel illustrated in Figure 3 and described above.

It may be preferable to operate the cooling panel when at least 50% of the cooling panel is covered by milk (e.g. 50% of the cooling panel by area). If the cooling panel is operated before 50% of the cooling panel is covered by milk, then ice may form over the cooling panel which may slow the process of cooling down the milk. Herein the volume of milk in the liquid volume required to cover at least 50% of the cooling panel is referred to as the critical volume.

The cooling panels may comprise one or more sets of pipework connected to a heat exchanger and a fluid mover (e.g. a compressor) to thereby form a refrigerant circuit. If the cooling panel is operated before 50% of the cooling panel is covered by milk, then ice may form over the cooling panel. A disadvantage of the ice forming a comparatively high volume of liquid refrigerant returns from the cooling panel to the fluid mover (e.g. a compressor).

Over time, the fluid mover may be damaged by the comparatively high volume of liquid refrigerant returning thereto.

Operating the cooling panel when at least 50% of the cooling panel is covered by milk (e.g. 50% of the cooling panel by area) may reduce the amount (e.g. mass) of ice which forms over the cooling panel compared to operating the cooling panel when less than 50% of the cooling panel is covered by milk.

Operating the cooling panel when at least 50% of the cooling panel is covered by milk (e.g. 50% of the cooling panel by area) may result in ice forming over the cooling panel (or at least that portion of the cooling panel not covered by milk) but the amount of ice formed may be an acceptable amount. For example, one or more of the disadvantages set out above may be avoided, minimised or reduced to an acceptable level e.g. the increase in the time taken to cool the milk may be negligible (e.g. a few seconds) and/or there may be no comparative increase in the volume of liquid refrigerant returning to the fluid mover.

For a given vessel with a particular volume, the filling rate of the vessel is fixed. For example, a 40,000 litre vessel (i.e. a vessel with a liquid volume of 40,000 litres) may be filled at a rate of 500 litres per minute. Therefore, vessels with this volume and fill rate take 80 minutes to fill (approx. 1 hour and 20 minutes). The milk enters the liquid volume at a temperature of approximately 35 °C and needs to be cooled to a temperature of 4 °C within two and a half hours of being extracted from the cow.

Reducing the critical volume of liquid (e.g. milk) advantageously increases the amount of time for which the cooling panels can be operated during the filling process. Accordingly, in some examples, the cooling time required to lower the temperature of milk from approximately 35 °C to 4 °C may be reduced. In some examples, the volume of milk which can be cooled from approximately 35 °C to 4 °C in the required time of 2.5 hours may be increased.

Vessels according to this aspect of the disclosure, having a liquid volume of 40,000 Litres have a critical volume of 185 Litres. This is less than prior art vessels which have the same volume of 40,000 Litres: the first prior art vessel has a critical volume of 270 Litres; the second prior art vessel has a critical volume of 3,980 Litres; the third prior art vessel has a critical volume of 190 Litres. Therefore, vessels according to this aspect of the disclosure have lower critical volumes in comparison to prior art vessels with a similar or identical liquid volume and the associated advantages thereof.

Advantageously, the projection portion forces the liquid to flow to the outer radius of the tank. Therefore, an outlet tube may be provided which is shorter than the radius of the cylindrical side wall (this is the longest outlet tube that would be needed for a cylindrical tank; see for example Figures 1 and 2). For example, an outlet tube may be provided which is comparatively shorter than those in some prior vessels (see e.g. Figures 1 and 2).

Providing an outlet tube which is as short as possible is advantageous because it may reduce the volume of milk left in the outlet tube. Any milk in the outlet tube is isolated from the liquid volume of the vessel and, therefore, may not cooled or mixed sufficiently. This may affect the quality of the milk in the outlet tube. The subquality milk in the outlet tube may also contaminate the milk in the liquid volume of the vessel. Current guidelines, stipulated by milk processors, state that the outlet tube should be no longer than 1500 mm in length, and ideally situated at the base of the vessel or in a side wall (e.g. a cylindrical wall) of the vessel. Advantageously, the present disclosure may provide an outlet tube which is shorter than 1500 mm in length. In examples, the outlet tube may have a radial length of 250 mm.

Advantageously, the projection portion of the base provides a concave region under the base of the vessel. In the event of leaks on the cooling panel or other refrigeration pipework disposed under the base of the vessel, the concave region provided by the projection portion may provide sufficient access to the underside of the vessel.

The projection portion may have a projection portion inclination angle wherein the projection portion inclination angle is the angle subtended by a normal vector of at a point on the surface of the projection portion and the cylindrical wall.

The projection portion may have a projection portion inclination angle of less than 5 °. For example, the projection portion inclination angle may be 4 °. Preferably the projection portion inclination angle may be 3 °. For example, the projection portion angle may be greater than 2 °.

The base may further comprise a gutter portion disposed circumferentially around the projection portion, wherein, the gutter portion is configured such that liquid disposed within the tank flows from the projection portion into the gutter portion.

The gutter portion may be arranged lower than a lower edge of the projecting portion. The gutter portion may have a sloped portion wherein the sloped portion is contiguous to the projection portion.

The sloped portion may have a sloped portion inclination angle wherein the sloped portion inclination angle is the angle subtended by a normal vector of at a point on the surface of the sloped portion and the cylindrical wall.

In examples, the sloped portion angle may be greater than the projection portion angle.

The outlet tube may be disposed in the gutter portion to thereby permit liquid disposed in the liquid volume to exit the tank.

The outlet tube extends radially from the base to a radial position, wherein the distance between the radial position and the central longitudinal axis is greater than the radius of the cylindrical wall.

In examples, the outlet tube may be disposed at a first longitudinal end of the cylindrical wall (e.g. adjacent the gutter) to thereby permit liquid disposed in the liquid volume to exit the tank.

The outlet tube extends radially from the first longitudinal end of the cylindrical wall to a radial position, wherein the distance between the radial position and the central longitudinal axis is greater than the radius of the cylindrical wall.

The projection portion of the base may comprise an inverted cone comprising a vertex, and wherein the vertex of the inverted cone is disposed within the cylindrical volume.

In example, the vertex is rounded. For example, the vertex may be dome-shaped and connected to a narrow end of an inverted conical frustrum.

The vertex may be disposed on the central longitudinal axis.

The base may consist of the projection portion and the gutter portion i.e. the base comprises exclusively the projection portion and the gutter portion.

In examples, over 50% of the area of the base is the projection portion.

The vessel may comprise a liquid inlet configured to provide liquid to the liquid volume.

The vessel may comprise a controller configured to operate the cooling panel in the event that a volume of liquid disposed in the liquid volume is at or above the critical volume.

In examples, the controller comprises a processor configured to receive inputs. The inputs comprise: a critical volume of the vessel; the flow rate of liquid into the liquid volume; and, an indication of the time at which liquid begins to enter the liquid volume. The controller is configured to calculate a calculated time wherein the calculated time is how much time it will take for the critical volume to be reached (i.e. from the time at which liquid begins to enter the liquid volume) and to operate the cooling panel when the calculated time has elapsed. When the calculated time has elapsed, at least 50% of the cooling panel will be covered by liquid (e.g. milk).

In examples, the controller is configured to receive an input from a sensor disposed in the tank. The sensor is configured to detect when liquid in the liquid volume reaches a level corresponding to the critical volume. In the event that liquid in the liquid volume reaches a level corresponding to a critical volume, the sensor sends a signal to the controller to indicate that the liquid in the liquid volume is at the critical volume. Upon receipt of this signal, the controller operates the cooling panel. When the calculated time has elapsed, at least 50% of the cooling panel will be covered by liquid (e.g. milk).

The cooling panel may be configured to cool a liquid disposed in the liquid volume from 35 °C to 4 °C.

The outlet tube may have a radial length of less than 1500 mm. The outlet tube may have a radial length of 250 mm.

A second aspect of the invention according to claim 19 discloses a method of operating the vessel of the first aspect, the method comprising:
operating the cooling panel to thereby cool a liquid when the liquid reaches a critical volume whereby the liquid covers half of the area of the cooling panel;
removing the liquid via the outlet tube, wherein the liquid is removed at a removal temperature.

The method may further include a step of providing a flow of liquid (e.g. milk) to a liquid volume of the vessel.

In examples, the liquid may be milk and the removal temperature may be 4 °C.

### Drawings

Figure 1 illustrates a lateral cross-sectional view of part of a first prior art vessel for cooling milk wherein the vessel comprises a funnel-shaped base;
Figure 2 illustrates a lateral cross-sectional view of part of a second prior art vessel for cooling milk wherein the vessel comprises a rounded base
Figure 3 illustrates a lateral cross-sectional view of part of a third prior art vessel for cooling milk wherein the vessel comprise a canted flat base;
Figure 4 illustrates a lateral cross-sectional view of part of a vessel for cooling milk;
Figure 5 illustrates an enlarged cross-sectional view of part of the vessel for cooling milk illustrated in Figure 4;
Figure 6 illustrates a flowchart depicting steps of a method of operating the vessel for milk illustrated in Figure 4;
Figure 7 illustrates a lateral cross-sectional view of a vessel for cooling milk according to the present disclosure;
Figure 8 illustrates a top-down cross-sectional view of the vessel illustrated in Figure 7;
Figure 9 illustrates a perspective view of an agitator paddle of the vessel illustrated in Figures 7 and 8.

In the Figures like elements are indicated by like reference signs.

### Specific description

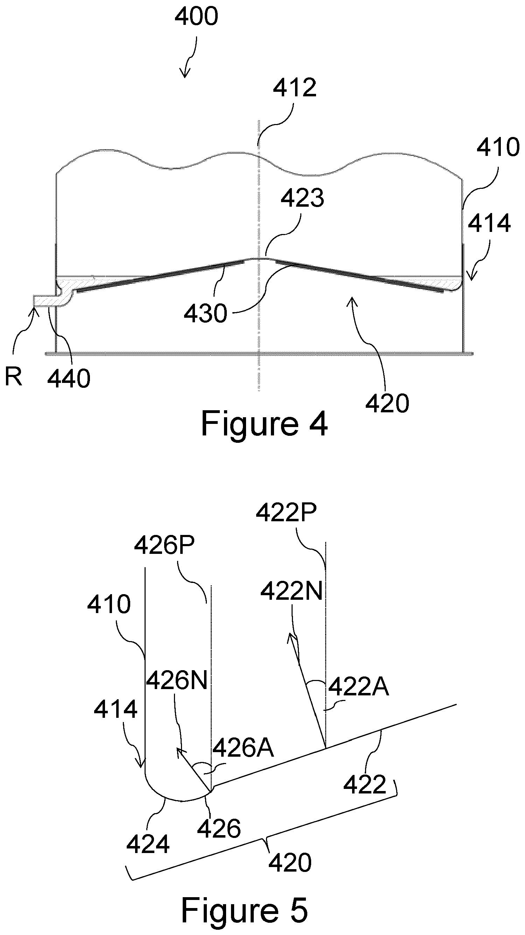

Figure 4 illustrates a lateral cross-sectional view of part of a vessel 400 for cooling milk according to the present disclosure. The vessel 400 comprises: a cylindrical wall 410; a base 420; a cooling panel 430; and, an outlet tube 440.

Figure 4 illustrates a lateral cross-sectional view of part of a vessel for cooling milk. The vessel 400 comprises: a cylindrical wall 410; a base 420; a cooling panel 430; and, an outlet tube 440.

The cylindrical wall 410 is arranged around a longitudinal axis 412. The cylindrical wall 410 comprises a first longitudinal end 414. The cylindrical wall 410 delimits a cylindrical volume.

The base 420 is connected to the cylindrical wall 410. In particular, the first longitudinal end 414 of the cylindrical wall is connected to the base 420. Together the cylindrical wall 410 and the base 420 delimit a liquid volume. That is, the cylindrical wall 410 and the base 420 form a tank configured to hold a liquid within the liquid volume.

The base 420 comprises a projection portion 422 and a gutter portion 424. The gutter portion 424 circumscribes the projection portion 424.

The projection portion 422 projects into the cylindrical volume. The projection portion 422 is an inverted conical frustrum with a dome-shaped vertex 423. The vertex 423 is disposed in the cylindrical volume. The vertex 423 is disposed along the central longitudinal axis. The vertex 423 is rounded e.g. the vertex 423 is convex with respect to the cylindrical volume. Therefore, in the present example, the cylindrical volume is greater than the liquid volume. The vertex 423 is disposed along the central longitudinal axis 412. As a result, the base 420 has rotational symmetry about the central longitudinal axis 412.

The cooling panel 430 is disposed along at least a portion of the base 420. The cooling panel 430 is an inverted conical frustrum. The cooling panel 430 is sized to fit under the sloped surface of the base 420. The cooling panel 430 is arranged so that liquid in contact with the base 420 is able to be cooled by the cooling panel 430. In other words, the cooling panel 430 is designed to be in contact with the base 420 i.e. so that there is no space provided between the base 420 and the cooling panel 430.

The cooling panel 430 is disposed along at least a portion of the base 420. The cooling panel 430 is disposed along at least a portion of the projection portion 422. In examples, the cooling panel is disposed exclusively on the projection portion i.e. the cooling panel is not disposed along the gutter portion.

The base 420 comprises a gutter portion 424. The gutter portion 424 is disposed circumferentially around the projection portion 422. The gutter portion 424 is configured such that liquid disposed within the tank flows from the projection portion 422 into the gutter portion 424.

The gutter portion 424 is arranged lower than a lower edge of the projecting portion 424 i.e. so water flows radially outward from the projecting portion 424 into the gutter portion 424. The gutter portion 424 has a sloped portion 426 contiguous to the projection portion 422. The sloped portion 426 is shaped so that water flows radially outward off the projection portion 422 and radially outward along the sloped portion 426.

The projection portion 422 has a projection portion 422A inclination angle wherein the projection portion inclination angle 422A is the angle subtended by a normal vector 422N of at a point on the surface of the projection portion 422 and the cylindrical wall 410. In Figure 5 a first line parallel 422P is illustrated which is parallel to the cylindrical wall. The sloped portion 426 has a sloped portion 426A inclination angle wherein the sloped portion inclination angle 426A is the angle subtended by a normal vector 426N of at a point on the surface of the sloped portion 426 and the cylindrical wall 410. In Figure 5 a second line parallel 426P is illustrated which is parallel to the cylindrical wall 410.

The projection portion 422 has a projection portion inclination angle 422A of less than 5 °. The projection portion inclination angle is non-zero i.e. greater than 0 °; the projection portion is not flat. Advantageously, the projecting portion 422 improves the structural integrity of the base 420 and also allows liquid to flow to the radially outward to the gutter portion 424 which in turn allows the outlet tube 440 to be provided close to the radial edge of the vessel, thereby permitting a relatively short (cf. prior art vessels of Figures 1 and 2) outlet tube 440 to be provided.

The sloped portion 426 has a sloped portion inclination angle 426A is greater than the projection portion angle 422A which advantageously ensures that liquid flows into the gutter portion from the projection portion.

In examples, the sloped portion may not be provided. Instead, the gutter portion may be a flat or curved portion disposed below the projection portion to thereby permit liquid to flow from the projection portion to the gutter portion.

In examples, the projection portion may consist of an inverted cone i.e. vertex is not dome-shaped. In such examples, the cooling panel may be either a conical frustrum or an inverted cone shape.

In examples, the vertex may be disposed at a position displaced from the central longitudinal axis.

The outlet tube 440 is disposed in fluid communication with the liquid volume i.e. the outlet tube 440 is configured to remove liquid from the liquid volume. The outlet tube 440 extends between the gutter portion 424 of the base 420 to a radial position R. The radial position R is disposed at distance from the central longitudinal axis 412 which is greater than the radius of the cylindrical walls 410. For a vessel with a liquid volume of 40,000 litres, the outlet tube 440 with a length of 250 mm.

In examples the outlet tube may be disposed in the cylindrical wall, for example, the outlet tube may be disposed at the first longitudinal end of the cylindrical wall rather than at the base.

In use, liquid (e.g. milk) is introduced into the liquid volume e.g. via an inlet, not shown in Figure 4. Typically, the cooling panels are operated when at least 50% of the area of the cooling panels is covered by the milk. When the liquid in the liquid volume is disposed over at least half of the area of the cooling panel 130, then the cooling panel 130 is operated to cool the liquid.

A controller may be provided wherein the controller is configured to operate the cooling panels when a critical volume of liquid is disposed in the liquid volume.

A typical vessel for cooling milk having the structure illustrated in Figure 4 have a volume of approximately 40,000 litres (40 m³) and a radius of approximately 1500 mm. With typical vessels of this structure, a volume of approximately 185 litres of liquid (approximately 0.185 m³) in the liquid volume is required to dispose over at least half of the area of the cooling panel 430.

A vessel having the structure illustrated in Figure 4, the projection portion 422 provides a concave region thereunder. The concave region permits access to the underside of the vessel i.e. for repairs or maintenance to be carried out underneath the vessel. If repairs or maintenance are required underneath a vessel according to the disclosure, then the vessel these be affected without the vessel removed or disassembled. This may result in decreased costs associated with the repairs or maintenance e.g. compared to the prior art vessels illustrated in Figures 1 to 3. This may result in a lesser period of downtime for the vessel whilst the repairs or maintenance are affected in comparison to prior art vessels which may need to be removed or disassembled.

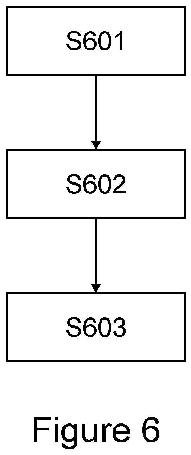

Figure 6 illustrates a flowchart depicting steps of a method of operating the vessel. A controller may be provided to execute the method. The controller comprises a processor and is configured to receive inputs. The method comprises steps set out below. The following steps are executed in sequence.

Providing, S601, a liquid to the liquid volume of the tank at a flow rate F. The liquid is typically milk. The controller may be configured to start the flow of liquid to the liquid volume but it may alternatively be done separately from the controller (e.g. a person may open a valve by hand and then provide an input to the controller indicating the same).

Next, operating, S602, the cooling panel to thereby cool the liquid when the liquid reaches a critical volume whereby the liquid covers half of the area of the cooling panel.

The controller may either: i) calculate an expected time taken for the milk to reach a critical volume; or ii) the controller may receive an indication from a sensor that the liquid in the liquid volume is at or above the critical volume.

In examples of option i), the controller receives inputs indicative of: a critical volume of the vessel; the flow rate of liquid into the liquid volume; and, the time at which liquid begins to enter the liquid volume. In these examples, the controller is configured to calculate a calculated time wherein the calculated time is how much time it will take for the critical volume to be reached (i.e. from the time at which liquid begins to enter the liquid volume) and to operate the cooling panel when the calculated time has elapsed. When the calculated time has elapsed, at least 50% of the cooling panel will be covered by liquid (e.g. milk).

In examples of option ii), a sensor is configured to detect when liquid in the liquid volume reaches a level corresponding to the critical volume. In the event that liquid in the liquid volume reaches a level corresponding to a critical volume, the sensor sends a signal to a controller to indicate that the liquid in the liquid volume is at the critical volume. Upon receipt of this signal, the controller operates the cooling panel. When the calculated time has elapsed, at least 50% of the cooling panel will be covered by liquid (e.g. milk).

Next removing, S603, the liquid via the outlet tube when the bulk temperature of the liquid reaches a removal temperature.

The method is performed to cool milk from 35 °C to a removal temperature of 4 °C. Preferably the rate vessel cools milk disposed therein to 4 °C in 150 minutes or less.

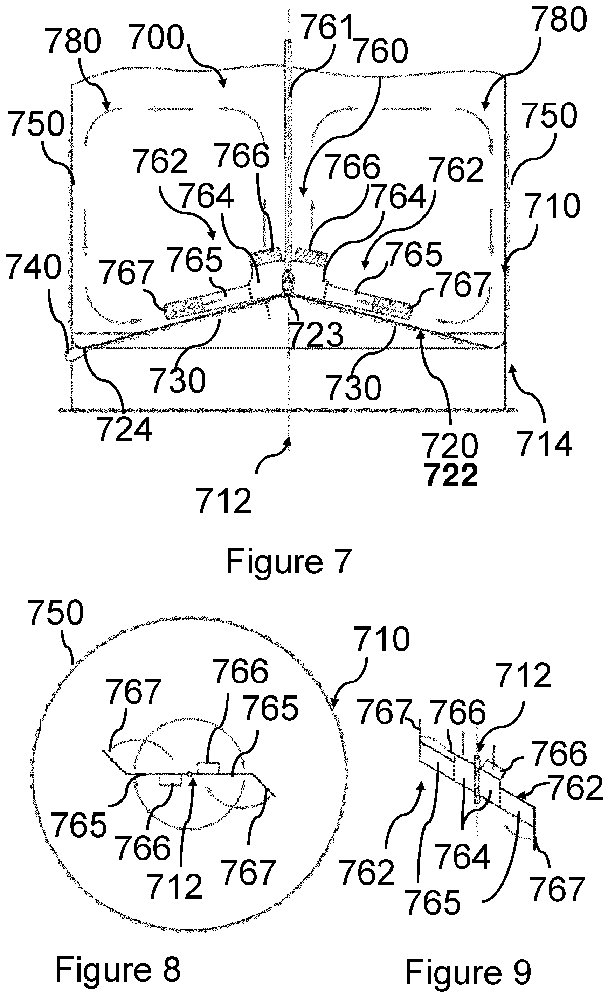

Figure 7 illustrates a lateral cross-sectional view of part of a vessel 700 for cooling milk according to the present disclosure. The vessel 700 has a similar structure to the vessel 400 shown in Figure 4. Similar to the vessel 400 shown in Figure 4, the vessel 700 comprises: a cylindrical wall 710; a base 720; a first cooling panel 730; and, an outlet tube 740. Additionally, the vessel 700 comprises: a second cooling panel 750; and an agitator paddle 760.

The cylindrical wall 710 is arranged around a longitudinal axis 712. The cylindrical wall 710 comprises a first longitudinal end 714. The cylindrical wall 710 delimits a cylindrical volume.

The base 720 is connected to the cylindrical wall 710. In particular, the first longitudinal end 714 of the cylindrical wall is connected to the base 720. Together the cylindrical wall 710 and the base 720 delimit a liquid volume. That is, the cylindrical wall 710 and the base 720 form a tank configured to hold a liquid within the liquid volume.

The base 720 comprises a projection portion 722 and a gutter portion 724. The gutter portion 724 circumscribes the projection portion 724.

The projection portion 722 projects into the cylindrical volume. The projection portion 722 is an inverted conical frustrum with a dome-shaped vertex 723. The vertex 723 is disposed in the cylindrical volume. The vertex 723 is disposed along the central longitudinal axis. The vertex 723 is rounded e.g. the vertex 723 is convex with respect to the cylindrical volume. Therefore, in the present example, the cylindrical volume is greater than the liquid volume. The vertex 723 is disposed along the central longitudinal axis 712. As a result, the base 720 has rotational symmetry about the central longitudinal axis 712.

The first cooling panel 730 is disposed along at least a portion of the base 720. The first cooling panel 730 is an inverted conical frustrum. The first cooling panel 730 is sized to fit under the sloped surface of the base 720. The first cooling panel 730 is arranged so that liquid in contact with the base 720 is able to be cooled by the first cooling panel 730. In other words, the first cooling panel 730 is designed to be in contact with the base 720 i.e. so that there is no space provided between the base 720 and the first cooling panel 730.

The first cooling panel 730 is disposed along at least a portion of the base 720. The first cooling panel 730 is disposed along at least a portion of the projection portion 722. In examples, the first cooling panel is disposed exclusively on the projection portion i.e. the first cooling panel is not disposed along the gutter portion.

The base 720 comprises a gutter portion 724. The gutter portion 724 is disposed circumferentially around the projection portion 722. The gutter portion 724 is configured such that liquid disposed within the tank flows from the projection portion 722 into the gutter portion 724.

The gutter portion 724 is arranged lower than a lower edge of the projecting portion 724 i.e. so water flows radially outward from the projecting portion 724 into the gutter portion 724. The gutter portion 724 has a sloped portion contiguous to the projection portion 722. The sloped portion is shaped so that water flows radially outward off the projection portion 722 and radially outward along the sloped portion.

The projection portion 722, in particular, the projection portion inclination angle, may be configured in the same manner as described above with reference to the like element in vessel 400 (shown in Figures 4 and 5).

The outlet tube 740 is disposed in fluid communication with the liquid volume i.e. the outlet tube 740 is configured to remove liquid from the liquid volume. The outlet tube 740 extends between the gutter portion 724 of the base 720 to a radial position R. The radial position R is disposed at distance from the central longitudinal axis 712 which is greater than the radius of the cylindrical walls 710. For a vessel with a liquid volume of 40,000 litres, the outlet tube 740 with a length of 250 mm.

The second cooling panel 750 is disposed along at least a portion of the cylindrical wall 710. The second cooling panel 730 has a cylindrical shape. The second cooling panel 750 is sized to fit around the cylindrical wall 710. The second cooling panel 750 is arranged so that liquid in contact with the cylindrical wall base 710 is able to be cooled by the second cooling panel 750. In other words, the second cooling panel 750 is designed to be in contact with the cylindrical wall 710 i.e. so that there is no space provided between the cylindrical wall 710 and the second cooling panel 750.

The agitator paddle 760 is disposed within the liquid volume of the vessel 700. The agitator paddle 760 is configured to rotate about the central longitudinal axis 712. The agitator paddle 760 is rotated by an axle 761 disposed through the liquid volume thereto. The agitator paddle 760 is configured to circulate liquid (e.g. milk) in the liquid volume of the vessel 700. Circulating the liquid in the liquid volume may increase the rate of cooling of the liquid, because a greater volume of hotter liquid may be moved past the cooling panels per unit time.

In the example shown in Figures 7, 8, and 9, the agitator paddle 760 is shaped to sit over (e.g. and conform to) the projection portion 722. In more detail, the agitator paddle 760 comprises two arms 762. In the present example, the arms are identical and disposed at 180° to one another around the central longitudinal axis. The two arms 762 are connected at the axle 761. Each of the two arms 762 has: an L-shaped portion; a first deflector panel 766; and, a second deflector panel 767.

For each arm 762, the L-shaped portion is a planar surface disposed perpendicular to the surface of the projection portion 722. Each L-shaped portion comprises two portions, a first portion 764 and a second portion 765 which are disposed in the same plane as one another and arranged to provide the L-shape. The first portion 764 and the second portion each are rectangular in shape and each have a long side and short side.

The first portion 764 of each L-shaped portion of each arm 762 is in contact with the axle 761 and has a long side which extends perpendicularly away from the surface of the projection portion 722.

For each of the arms 762 the first deflector panel 766 has a planar form. In the example, shown in Figures 7 to 9, each first deflector panel 766 has a rectangular shape. For each of the arms 762, an end of the first deflector panel 766 is joined to the end of the first portion 764 of the L-shaped portion of the arm 762.

The first deflector panel 766 is disposed at an angle to the L-shaped portion. That is, there is a non-zero angle between a normal vector of the surface of the first deflector panel and a normal vector of the surface of the L-shaped portion. The end of the first deflector panel 766 opposite the end joined to the L-shaped portion is disposed in a lagging position e.g. such that when the agitator paddle 760 rotates around the axle 761 the fluid incident on the first deflector panel 766 is directed upwards away from the base 720 and approximately parallel to the longitudinal axis 712. In an example wherein the agitator paddle 760 rotates in a clockwise direction when looking down towards the base 720 of the vessel, then the first deflector panel 766 is disposed so that the end of the first deflector panel 766 opposite the end joined to the L-shaped portion is disposed anti-clockwise relative to the end connected to the L-shaped panel.

The second portion 765 of each L-shaped portion of each arm 762 has a long side which extends along the projection portion 722 (e.g. the long side is approximately parallel to the projection portion)
For each of the arms 762 the second deflector panel 767 has a planar form. In the example, shown in Figures 7 to 9, each second deflector panel 767 has a rectangular shape. For each of the arms 762, an end of the second deflector panel 767 is joined to the end of the second portion 765 of the L-shaped portion of the arm 762.

The second deflector panel 767 is disposed at an angle to the L-shaped portion. That is, there is a non-zero angle between a normal vector of the surface of the second deflector panel and a normal vector of the surface of the L-shaped portion. The end of the second deflector panel 767 opposite the end joined to the L-shaped portion is disposed in a leading position e.g. such that when the agitator paddle 760 rotates around the axle 761 the fluid incident on the second deflector panel 767 is directed away towards the central longitudinal axis 712. In an example wherein the agitator paddle 760 rotates in a clockwise direction when looking down towards the base of the vessel, then the second deflector panel 767 is disposed so that the end of the second deflector panel 767 opposite the end joined to the L-shaped portion is disposed clockwise relative to the end connected to the L-shaped panel.

In use, liquid (e.g. milk) is introduced into the liquid volume e.g. via an inlet, not shown in Figures 7 to 9. Typically, the first cooling panel 730 are operated when at least 50% of the area of the cooling panels is covered by the milk. When the liquid in the liquid volume is disposed over at least half of the area of the first cooling panel 730, then the first cooling panel 730 is operated to cool the liquid.

The second cooling panel 750 is operated at the same time as or after the first cooling panel 730 has begun operation.

The agitator panel 760 is operated (e.g. rotation) to agitate the liquid (e.g. milk) in the vessel 700. As the agitator panel 760 rotates about the axle 761, a circulation loop of the liquid is established e.g. wherein liquid is moved by the agitator paddle 760, from close to the base 720 and outer radius of the liquid volume of the vessel 700, towards the central longitudinal axis 712, up and radially outwards towards the cylindrical wall 720 of the vessel 700 and back down along the cylindrical wall 720 to the outer radius and base 720 of the vessel.

In more detail, the second deflector panel 767 drags liquid (e.g. milk) from the bottom 720 and outer radius of the vessel up along the projection portion 722 of the base 720 and towards the central longitudinal axis 712. When the liquid is close to the central longitudinal axis 712 of the vessel 700, the first deflector panel 766 directs the liquid upwards away from the base 720 and approximately parallel to the longitudinal axis 712. The liquid disperses out towards the cylindrical wall 720 of the vessel 700 and moves along the cylindrical wall 720 to the base of the tank. In this manner a circulation loop is provided.

This circulation loop may contribute to a greater rate of cooling of the liquid in the tank by moving a flow of liquid past the second cooling panel 750 located around the cylindrical wall of the vessel.

Furthermore, the inverted conical shape of the base (e.g. the projection portion 722) may provide an comparative improvement to other conventional shaped vessels (see Figures 1 to 3), particularly at lower volumes of liquid (for example, at volumes 2000 litres or less). One reason for this may be that the second deflector panels 767, effectively "scoop" milk from the lower outside edges of the vessels (e.g. the gutter portion of the base), and push the milk across the projection portion of the base. The conical shape of the base then permits the milk to flow back to the lower outside edge of the base (e.g. radially outward from the apex of the projection portion to the gutter portion of the base). This process is repeated at every revolution of the agitation paddle (e.g. which may be driven at any speed, such as 30 revolutions per minute). This constant "tide" of milk flowing over the base and the first cooling panel 730 may thereby improve the heat transfer between the refrigerant in the cooling panels and the milk.

Furthermore, by combining the inverted conical base design and the agitator paddle, even at low volumes (e.g. less than 2000 litres), there is no part of the first cooling panel 730 which will not have some milk passing over the cooling surface (at least intermittently), which may thereby prevent any moisture in the air in the vessel freezing on the plates. As stated herein, water ice forming over cooling plates may reduce the cooling efficiency of the plates which must be avoided or reduced or minimised).

A controller may be provided wherein the controller is configured to operate the first cooling panel 730 when a critical volume of liquid is disposed in the liquid volume. The controller may also operate the second cooling panel 750 and the agitator paddle 760.

The cooling panels described herein may comprise one or more sets of pipework connected to a heat exchanger and a fluid mover to thereby form a refrigerant circuit. The heat exchanger is disposed in an environment removed from the cooling panels (e.g. outdoors). One or more refrigerant may be disposed within the refrigerant circuit.

The refrigerant in the refrigerant circuit is circulated around the refrigerant circuit by the fluid mover (e.g. a compressor). The liquid (i.e. milk) in the liquid volume heats the refrigerant in pipework of the cooling panel. The heated refrigerant is moved by the fluid mover to the heat exchanger. The fluid in the heat exchanger warms the environment, thus cooling the refrigerant which is then recirculated to the pipework at the cooling panels where the process repeats. In this manner, the cooling panels may cool the milk.

In examples, the first cooling panel and the second cooling panel may be provided as a combined element e.g. there may be fluid communication between coolant circulated in the first cooling panel and coolant circulated in the second cooling panel.

Other examples and variations of the disclosure will be apparent to the skilled addressee in the context of the present disclosure. The scope of the present invention is defined by the appended claims.

## Claims

1. A vessel (700) for cooling milk, the vessel comprising:
a tank configured to hold a liquid, the tank comprising:
a cylindrical side wall (710) enclosing a cylindrical volume around a central longitudinal axis (712), the cylindrical side wall (710) having a first longitudinal end (714); and
a base (720) connected to the cylindrical side wall (710) at the first longitudinal end (714) of the cylindrical side wall (710), wherein the cylindrical side wall (710) and the base (720) enclose a liquid volume configured to hold a liquid,
wherein the base (720) comprises a projection portion (722) which projects into the cylindrical volume from the first longitudinal end (714) of the cylindrical side wall (710);
a cooling panel (730) disposed along at least a portion of the base (720) wherein the cooling panel (730) is configured to cool a liquid disposed in the liquid volume;
an agitator paddle (760) disposed within the liquid volume, the agitator paddle being configured to rotate about the central longitudinal axis (712), wherein the agitator paddle (760) is rotated by an axle (761) disposed through the liquid volume thereto to establish a circulation loop, wherein the agitator paddle moves liquid from close to the base (720) and outer radius of the liquid volume of the vessel towards the central longitudinal axis, such that the liquid is moved upwards and radially outwards towards the cylindrical side wall and back down along the cylindrical side wall to the outer radius and the base of the vessel; and
an outlet tube (740) disposed in the base, wherein the outlet tube is configured to permit a liquid disposed in the liquid volume to exit the tank.

2. The vessel of claim 1, wherein the agitator paddle (760) is shaped to sit over the projection portion (722) and comprises two arms (762), wherein the two arms are identical and disposed at 180° to one another around the central longitudinal axis (712), wherein the two arms are connected to the axle (761), and wherein each of the two arms comprises an L-shaped portion, a first deflector panel (766) and a second deflector panel (767).

3. The vessel of claim 2, configured such that the second deflector panel (767) drags liquid from the base and outer radius of the vessel (700) up along the projection portion of the base and towards the central longitudinal axis, wherein the first deflector panel (766) is configured to direct liquid upwards away from the base (720) in a direction parallel to the central longitudinal axis (712) when the liquid is close to the central longitudinal axis of the vessel, such that the liquid disperses out towards the cylindrical wall of the vessel and moves along the cylindrical wall to the base of the tank, to thereby provide a circulation loop.

4. The vessel of claim 3, wherein the first deflector panel (766) is disposed at an angle to the L-shaped portion such that there is a non-zero angle between a normal vector of the surface of the first deflector panel and a normal vector of the surface of the L-shaped portion, wherein an end of the first deflector panel opposite an end joined to the L-shaped portion is disposed in a lagging position with respect to the central longitudinal axis (712).

5. The vessel of any of claims 2 to 4, wherein the second deflector panel (767) is disposed at an angle to the L-shaped portion such that there is a non-zero angle between a normal vector of the surface of the second deflector panel and a normal vector of the surface of the L-shaped portion, wherein an end of the second deflector panel opposite an end joined to the L-shaped portion is disposed in a leading position with respect to the central longitudinal axis (712).

6. The vessel of any preceding claim, wherein the cooling panel is a first cooling panel (730) and the vessel further comprises a second cooling panel (750) disposed along at least a portion of the cylindrical side wall (710), wherein the second cooling panel has a cylindrical shape and is sized to fit around the cylindrical side wall, wherein the second cooling panel is arranged to cool liquid in contact with a base of the cylindrical side wall.

7. The vessel (700) of any preceding claim, wherein:
the projection portion (722) has a projection portion inclination angle wherein the projection portion inclination angle is the angle subtended by a normal vector at a point on the surface of the projection portion (722) and the cylindrical side wall (710);
optionally wherein the projection portion (722) has a projection portion inclination angle of less than 5°.

8. The vessel (700) of any of the preceding claims, wherein:
the base (720) further comprises a gutter portion (724) disposed circumferentially around the projection portion (722), wherein the gutter portion (724) is configured such that liquid disposed within the tank flows from the projection portion (722) into the gutter portion (724);
optionally wherein the gutter portion (724) is arranged lower than a lower edge of the projection portion (722);
optionally wherein the gutter portion (724) has a sloped portion, wherein the sloped portion is contiguous to the projection portion (722);
optionally wherein the sloped portion has a sloped portion inclination angle, wherein the sloped portion inclination angle is the angle subtended by a normal vector of at a point on the surface of the sloped portion and the cylindrical side wall (710).

9. The vessel (700) of claim 8 as dependent on claim 7, wherein:
the sloped portion inclination angle is greater than the projection portion inclination angle.

10. The vessel (700) of claim 8 or claim 9, wherein:
the outlet tube (740) is disposed in the gutter portion (724) to thereby permit liquid disposed in the liquid volume to exit the tank.

11. The vessel (700) of any of the preceding claims, wherein:
the projection portion (722) of the base (720) comprises an inverted cone comprising a vertex, and wherein the vertex of the inverted cone is disposed within the cylindrical volume;
optionally wherein the vertex is rounded.

12. The vessel (700) of claim 11, wherein:
the vertex of the inverted cone is disposed on the central longitudinal axis.

13. The vessel (700) of claim 8 or any claim dependent thereon, wherein:
the base (720) consists of the projection portion (722) and the gutter portion (724);
optionally wherein over 50% of the area of the base (720) is the projection portion (722).

14. The vessel (700) of any of the preceding claims, comprising:
a liquid inlet configured to provide liquid to the liquid volume.

15. The vessel (700) of any of the preceding claims, comprising:
a controller configured to operate the cooling panel (730) in the event that a volume of liquid disposed in the liquid volume is at or above a critical volume whereby the liquid covers half of the area of the cooling panel (730).

16. The vessel (700) of any of the preceding claims, wherein:
the cooling panel (730) is configured to cool a liquid disposed in the liquid volume from 35 °C to 4 °C.

17. The vessel (700) of any of the preceding claims, wherein:
the outlet tube (740) extends radially from the base (720) to a radial position,
wherein the distance between the radial position and the central longitudinal axis (712) is greater than the radius of the cylindrical side wall (710).

18. The vessel (700) of any of the preceding claims, wherein:
the outlet tube (740) has a radial length of less than 1500 mm, for example, a radial length of 250 mm.

19. A method of operating the vessel (700) of any of the preceding claims, the method comprising:
operating the cooling panel (730) to thereby cool a liquid when the liquid reaches a critical volume whereby the liquid covers half of the area of the cooling panel (730);
removing the liquid via the outlet tube (740), wherein the liquid is removed at a removal temperature.

20. The method of claim 19, wherein the liquid is milk and the removal temperature is 4 °C.

## Patentansprüche

1. Gefäß (700) zum Kühlen von Milch, wobei das Gefäß Folgendes umfasst:
einen Tank, der dazu konfiguriert ist, eine Flüssigkeit aufzunehmen, wobei der Tank Folgendes umfasst:
eine zylindrische Seitenwand (710), die ein zylindrisches Volumen um eine zentrale Längsachse (712) herum umschließt, wobei die zylindrische Seitenwand (710) ein erstes Längsende (714) aufweist; und
eine Basis (720), die an dem ersten Längsende (714) der zylindrischen Seitenwand (710) mit der zylindrischen Seitenwand (710) verbunden ist,
wobei die zylindrische Seitenwand (710) und die Basis (720) ein Flüssigkeitsvolumen umschließen, das dazu konfiguriert ist, eine Flüssigkeit aufzunehmen,
wobei die Basis (720) einen Vorsprungsabschnitt (722) umfasst, der vom ersten Längsende (714) der zylindrischen Seitenwand (710) in das zylindrische Volumen hineinragt;
eine Kühlplatte (730), die entlang mindestens eines Abschnitts der Basis (720) angeordnet ist, wobei die Kühlplatte (730) dazu konfiguriert ist, eine Flüssigkeit zu kühlen, die in dem Flüssigkeitsvolumen angeordnet ist;
ein Rührflügel (760), der innerhalb des Flüssigkeitsvolumens angeordnet ist, wobei der Rührflügel dazu konfiguriert ist, um die zentrale Längsachse (712) zu rotieren, wobei der Rührflügel (760) durch eine Achse (761) rotiert wird, die durch das Flüssigkeitsvolumen hindurch in diesem angeordnet ist, um eine Zirkulationsschleife einzurichten, wobei der Rührflügel Flüssigkeit aus der Nähe der Basis (720) und des Außenradius des Flüssigkeitsvolumens des Gefäßes in Richtung der zentralen Längsachse bewegt, sodass die Flüssigkeit nach oben und radial nach außen in Richtung der zylindrischen Seitenwand und entlang der zylindrischen Seitenwand wieder nach unten zum Außenradius und zur Basis des Gefäßes bewegt wird; und
ein Auslassrohr (740), das in der Basis angeordnet ist, wobei das Auslassrohr dazu konfiguriert ist, einer Flüssigkeit, die im Flüssigkeitsvolumen angeordnet ist, das Verlassen des Tanks zu ermöglichen.

2. Gefäß nach Anspruch 1, wobei der Rührflügel (760) so geformt ist, dass er über dem Vorsprungsabschnitt (722) sitzt, und zwei Arme (762) umfasst, wobei die beiden Arme identisch sind und um die zentrale Längsachse (712) um 180° zueinander angeordnet sind, wobei die beiden Arme an die Achse (761) angeschlossen sind, und wobei jeder der beiden Arme einen L-förmigen Abschnitt, eine erste Ablenkplatte (766) und eine zweite Ablenkplatte (767) umfasst.

3. Gefäß nach Anspruch 2, das dazu konfiguriert ist, dass die zweite Ablenkplatte (767) Flüssigkeit von der Basis und vom Außenradius des Gefäßes (700) entlang des Vorsprungsabschnitts der Basis nach oben und in Richtung der zentralen Längsachse zieht, wobei die erste Ablenkplatte (766) dazu konfiguriert ist, Flüssigkeit nach oben von der Basis (720) weg in einer Richtung parallel zur zentralen Längsachse (712) zu leiten, wenn sich die Flüssigkeit in der Nähe der zentralen Längsachse des Gefäßes befindet, sodass sich die Flüssigkeit zur zylindrischen Wand des Gefäßes hin ausbreitet und sich entlang der zylindrischen Wand zur Basis des Gefäßes bewegt, um dadurch eine Zirkulationsschleife bereitzustellen.

4. Gefäß nach Anspruch 3, wobei die erste Ablenkplatte (766) in einem Winkel zum L-förmigen Abschnitt angeordnet ist, sodass zwischen einem Normalenvektor der Oberfläche der ersten Ablenkplatte und einem Normalenvektor der Oberfläche des L-förmigen Abschnitts ein Winkel ungleich Null vorliegt, wobei ein Ende der ersten Ablenkplatte, das dem mit dem L-förmigen Abschnitt verbundenen Ende gegenüberliegt, in einer nachlaufenden Position in Bezug auf die zentrale Längsachse (712) angeordnet ist.

5. Gefäß nach einem der Ansprüche 2 bis 4, wobei die zweite Ablenkplatte (767) in einem Winkel zum L-förmigen Abschnitt angeordnet ist, sodass zwischen einem Normalenvektor der Oberfläche der zweiten Ablenkplatte und einem Normalenvektor der Oberfläche des L-förmigen Abschnitts ein Winkel ungleich Null vorliegt, wobei ein Ende der zweiten Ablenkplatte, das dem mit dem L-förmigen Abschnitt verbundenen Ende gegenüberliegt, in einer vorlaufenden Position in Bezug auf die zentrale Längsachse (712) angeordnet ist.

6. Gefäß nach einem der vorhergehenden Ansprüche, wobei die Kühlplatte eine erste Kühlplatte (730) ist und das Gefäß ferner eine zweite Kühlplatte (750) umfasst, die entlang mindestens eines Abschnitts der zylindrischen Seitenwand (710) angeordnet ist, wobei die zweite Kühlplatte eine zylindrische Form aufweist und so dimensioniert ist, dass sie um die zylindrische Seitenwand herum passt, wobei die zweite Kühlplatte so angeordnet ist, dass sie Flüssigkeit kühlt, die mit der Basis der zylindrischen Seitenwand in Kontakt steht.

7. Gefäß (700) nach einem der vorhergehenden Ansprüche, wobei:
der Vorsprungsabschnitt (722) einen Neigungswinkel des Vorsprungsabschnitts aufweist, wobei der Neigungswinkel des Vorsprungsabschnitts der Winkel ist, der von einem Normalenvektor an einem Punkt auf der Oberfläche des Vorsprungsabschnitts (722) und der zylindrischen Seitenwand (710) eingeschlossen wird;
wobei der Vorsprungsabschnitt (722) optional einen Neigungswinkel des Vorsprungsabschnitts von weniger als 5° aufweist.

8. Gefäß (700) nach einem der vorhergehenden Ansprüche, wobei:
die Basis (720) ferner einen Rinnenabschnitt (724) umfasst, der in Umfangsrichtung um den Vorsprungsabschnitt (722) herum angeordnet ist, wobei der Rinnenabschnitt (724) derart konfiguriert ist, dass sich innerhalb des Tanks befindliche Flüssigkeit vom Vorsprungsabschnitt (722) in den Rinnenabschnitt (724) fließt;
wobei der Rinnenabschnitt (724) optional tiefer als eine Unterkante des Vorsprungsabschnitts (722) angeordnet ist;
wobei der Rinnenabschnitt (724) optional einen Schrägabschnitt aufweist, wobei der Schrägabschnitt an den Vorsprungsabschnitt (722) angrenzt;
optional, wobei der Schrägabschnitt einen Neigungswinkel des Schrägabschnitts aufweist, wobei der Neigungswinkel des Schrägabschnitts der Winkel ist, der von einem Normalenvektor an einem Punkt auf der Oberfläche des Schrägabschnitts und der zylindrischen Seitenwand (710) eingeschlossen wird.

9. Gefäß (700) nach Anspruch 8, der von Anspruch 7 abhängt, wobei:
der Neigungswinkel des Schrägabschnitts größer ist als der Neigungswinkel des Vorsprungsabschnitts.

10. Gefäß (700) nach Anspruch 8 oder Anspruch 9, wobei:
das Auslassrohr (740) im Rinnenabschnitt (724) angeordnet ist, um dadurch zu ermöglichen, dass Flüssigkeit, die im Flüssigkeitsvolumen angeordnet ist, den Tank verlässt.

11. Gefäß (700) nach einem der vorhergehenden Ansprüche, wobei:
der Vorsprungsabschnitt (722) der Basis (720) einen umgekehrten Kegel umfasst, der einen Scheitelpunkt umfasst, und wobei der Scheitelpunkt des umgekehrten Kegels innerhalb des zylindrischen Volumens angeordnet ist;
wobei der Scheitelpunkt optional abgerundet ist.

12. Gefäß (700) nach Anspruch 11, wobei:
der Scheitelpunkt des umgekehrten Kegels auf der zentralen Längsachse angeordnet ist.

13. Gefäß (700) nach Anspruch 8 oder einem davon abhängigen Anspruch, wobei:
die Basis (720) aus dem Vorsprungsabschnitt (722) und dem Rinnenabschnitt (724) besteht;
wobei optional mehr als 50 % des Bereichs der Basis (720) auf den Vorsprungsabschnitt (722) entfallen.

14. Gefäß (700) nach einem der vorhergehenden Ansprüche, umfassend: einen Flüssigkeitseinlass, der dazu konfiguriert ist, dem Flüssigkeitsvolumen Flüssigkeit bereitzustellen.

15. Gefäß (700) nach einem der vorhergehenden Ansprüche, umfassend:
einen Controller, der dazu konfiguriert ist, die Kühlplatte (730) zu betreiben, falls ein Volumen an Flüssigkeit, das im Flüssigkeitsvolumen angeordnet ist, bei oder über einem kritischen Volumen liegt, wodurch die Flüssigkeit die Hälfte des Bereichs der Kühlplatte (730) abdeckt.

16. Gefäß (700) nach einem der vorhergehenden Ansprüche, wobei: die Kühlplatte (730) dazu konfiguriert ist, eine Flüssigkeit, die im Flüssigkeitsvolumen angeordnet ist, von 35 °C auf 4 °C abzukühlen.

17. Gefäß (700) nach einem der vorhergehenden Ansprüche, wobei:
das Auslassrohr (740) sich radial von der Basis (720) bis zu einer radialen Position erstreckt,
wobei der Abstand zwischen der radialen Position und der zentralen Längsachse (712) größer ist als der Radius der zylindrischen Seitenwand (710).

18. Gefäß (700) nach einem der vorhergehenden Ansprüche, wobei:
das Auslassrohr (740) eine radiale Länge von weniger als 1500 mm aufweist, beispielsweise eine radiale Länge von 250 mm.

19. Verfahren zum Betreiben des Gefäßes (700) nach einem der vorhergehenden Ansprüche, wobei das Verfahren Folgendes umfasst:
Betreiben der Kühlplatte (730), um dadurch eine Flüssigkeit zu kühlen, wenn die Flüssigkeit ein kritisches Volumen erreicht, wodurch die Flüssigkeit die Hälfte des Bereichs der Kühlplatte (730) abdeckt;
Entfernen der Flüssigkeit über das Auslassrohr (740), wobei die Flüssigkeit bei einer Entfernungstemperatur entfernt wird.

20. Verfahren nach Anspruch 19, wobei die Flüssigkeit Milch ist und die Entfernungstemperatur 4 °C beträgt.

## Revendications

1. Récipient (700) pour refroidir du lait, le récipient comprenant :
un réservoir configuré pour contenir un liquide, le réservoir comprenant :
une paroi latérale cylindrique (710) renfermant un volume cylindrique autour d'un axe longitudinal central (712), la paroi latérale cylindrique (710) comportant une première extrémité longitudinale (714) ; et
une base (720) reliée à la paroi latérale cylindrique (710) au niveau de la première extrémité longitudinale (714) de la paroi latérale cylindrique (710),
la paroi la paroi latérale cylindrique (710) et la base (720) renfermant un volume de liquide configuré pour contenir un liquide,
la base (720) comprenant une partie saillante (722) qui fait saillie dans le volume cylindrique depuis la première extrémité longitudinale (714) de la paroi la paroi latérale cylindrique (710) ;
un panneau de refroidissement (730) disposé le long d'au moins une partie de la base (720), le panneau de refroidissement (730) étant configuré pour refroidir un liquide disposé dans le volume de liquide ;
une pale d'agitateur (760) disposée à l'intérieur du volume de liquide, la pale d'agitateur étant configurée pour tourner autour de l'axe longitudinal central (712), la pale d'agitateur (760) étant mise en rotation par un axe (761) disposé à travers le volume de liquide pour établir une boucle de circulation, la pale d'agitateur déplaçant du liquide depuis une position proche de la base (720) et du rayon externe du volume de liquide du récipient vers l'axe longitudinal central, de telle sorte que le liquide soit déplacé vers le haut et radialement vers l'extérieur vers la paroi latérale cylindrique et redescende le long de la paroi la paroi latérale cylindrique vers le rayon externe et la base du récipient ; et
un tube de sortie (740) disposé dans la base, le tube de sortie étant configuré pour permettre à un liquide disposé dans le volume de liquide de sortir du réservoir.

2. Récipient selon la revendication 1, la pale d'agitateur (760) étant façonnée pour s'ajuster sur la partie saillante (722) et comprenant deux bras (762), les deux bras étant identiques et disposés à 180° l'un de l'autre autour de l'axe longitudinal central (712), les deux bras étant reliés à l'axe (761), et chacun des deux bras comprenant une partie en forme de L, un premier panneau déflecteur (766) et un second panneau déflecteur (767).

3. Récipient selon la revendication 2, configuré de telle sorte que le second panneau déflecteur (767) entraîne du liquide depuis la base et le rayon externe du récipient (700) vers le haut le long de la partie saillante de la base et vers l'axe longitudinal central, le premier panneau déflecteur (766) étant configuré pour diriger du liquide vers le haut à l'écart de la base (720) dans une direction parallèle à l'axe longitudinal central (712) lorsque le liquide est proche de l'axe longitudinal central du récipient, de telle sorte que le liquide se disperse vers l'extérieur vers la paroi cylindrique du récipient et se déplace le long de la paroi cylindrique jusqu'à la base du réservoir, pour assurer ainsi une boucle de circulation.

4. Récipient selon la revendication 3, le premier panneau déflecteur (766) étant disposé selon un angle par rapport à la partie en forme de L de telle sorte qu'il y ait un angle non nul entre un vecteur normal de la surface du premier panneau déflecteur et un vecteur normal de la surface de la partie en forme de L, une extrémité du premier panneau déflecteur opposée à une extrémité reliée à la partie en forme de L étant disposée dans une position en retard par rapport à l'axe longitudinal central (712).

5. Récipient selon l'une quelconque des revendications 2 à 4, le second panneau déflecteur (767) étant disposé selon un angle par rapport à la partie en forme de L de telle sorte qu'il y ait un angle non nul entre un vecteur normal de la surface du second panneau déflecteur et un vecteur normal de la surface de la partie en forme de L, une extrémité du second panneau déflecteur opposée à une extrémité reliée à la partie en forme de L étant disposée dans une position en avance par rapport à l'axe longitudinal central (712).

6. Récipient selon l'une quelconque des revendications précédentes, le panneau de refroidissement étant un premier panneau de refroidissement (730) et le récipient comprenant en outre un second panneau de refroidissement (750) disposé le long d'au moins une partie de la paroi latérale cylindrique (710), le second panneau de refroidissement présentant une forme cylindrique et étant dimensionné pour s'ajuster autour de la paroi latérale cylindrique, le second panneau de refroidissement étant conçu pour refroidir du liquide en contact avec une base de la paroi latérale cylindrique.

7. Récipient (700) selon l'une quelconque des revendications précédentes,
la partie saillante (722) présentant un angle d'inclinaison de partie saillante, l'angle d'inclinaison de partie saillante étant l'angle sous-tendu par un vecteur normal en un point sur la surface de la partie saillante (722) et la paroi latérale cylindrique (710) ;
la partie saillante (722) présentant éventuellement un angle d'inclinaison de partie saillante inférieur à 5°.

8. Récipient (700) selon l'une quelconque des revendications précédentes,
la base (720) comprenant en outre une partie gouttière (724) disposée de manière circonférentielle autour de la partie saillante (722), la partie gouttière (724) étant configurée de telle sorte que du liquide disposé à l'intérieur du réservoir s'écoule depuis la partie saillante (722) dans la partie gouttière (724) ;
la partie gouttière (724) étant éventuellement agencée plus bas qu'un bord inférieur de la partie
saillante (722) ;
la partie gouttière (724) présentant éventuellement une partie inclinée, la partie inclinée étant contiguë à la partie saillante (722) ;
la partie inclinée présentant éventuellement un angle d'inclinaison de partie inclinée, l'angle d'inclinaison de partie inclinée étant l'angle sous-tendu par un vecteur normal en un point sur la surface de la partie inclinée et la paroi latérale cylindrique (710).

9. Récipient (700) selon la revendication 8 lorsqu'elle dépend de la revendication 7,
l'angle d'inclinaison de partie inclinée étant supérieur à l'angle d'inclinaison de partie saillante.

10. Récipient (700) selon la revendication 8 ou 9,
le tube de sortie (740) étant disposé dans la partie gouttière (724) pour permettre ainsi à un liquide disposé dans le volume de liquide de sortir du réservoir.

11. Récipient (700) selon l'une quelconque des revendications précédentes,
la partie saillante (722) de la base (720) comprenant un cône inversé comprenant un sommet, et le sommet du cône inversé étant disposé à l'intérieur du volume cylindrique ;
le sommet étant éventuellement arrondi.

12. Récipient (700) selon la revendication 11,
le sommet du cône inversé étant disposé sur l'axe longitudinal central.

13. Récipient (700) selon la revendication 8 ou l'une quelconque de ses revendications dépendantes,
la base (720) étant constituée de la partie saillante (722) et de la partie gouttière (724) ;
plus de 50 % de la surface de la base (720) étant éventuellement la partie saillante (722).

14. Récipient (700) selon l'une quelconque des revendications précédentes, comprenant : une entrée de liquide configurée pour fournir du liquide au volume de liquide.

15. Récipient (700) selon l'une quelconque des revendications précédentes, comprenant :
un dispositif de commande configuré pour faire fonctionner le panneau de refroidissement (730) dans le cas où un volume de liquide disposé dans le volume de liquide est supérieur ou égal à un volume critique de telle sorte que le liquide recouvre la moitié de la surface du panneau de refroidissement (730).

16. Récipient (700) selon l'une quelconque des revendications précédentes, le panneau de
refroidissement (730) étant configuré pour refroidir un liquide disposé dans le volume de liquide de 35 °C à 4 °C.

17. Récipient (700) selon l'une quelconque des revendications précédentes,
le tube de sortie (740) s'étendant radialement depuis la base (720) jusqu'à une position radiale,
la distance entre la position radiale et l'axe longitudinal central (712) étant supérieure au rayon de la paroi latérale cylindrique (710).

18. Récipient (700) selon l'une quelconque des revendications précédentes,
le tube de sortie (740) présentant une longueur radiale inférieure à 1500 mm, par exemple une longueur radiale de 250 mm.

19. Procédé de fonctionnement du récipient (700) selon l'une quelconque des revendications précédentes, le procédé consistant à :
faire fonctionner le panneau de refroidissement (730) pour refroidir ainsi un liquide lorsque le liquide atteint un volume critique, de telle sorte que le liquide recouvre la moitié de la surface du panneau de
refroidissement (730) ;
retirer le liquide par l'intermédiaire du tube de sortie (740), le liquide étant retiré à une température de retrait.

20. Procédé selon la revendication 19, le liquide étant du lait et la température de retrait étant de 4 °C.
